# EUROPEAN PATENT SPECIFICATION

(11) **EP 3 988 973 B1**
(45) Date of publication and mention of the grant of the patent: **11.10.2023**
(21) Application number: 20202877.5
(22) Date of filing: 20.10.2020
(51) Int. Cl.: G02B 6/02

(54) **METHOD AND CONTROL SYSTEM FOR CONTROLLING A PROCESS FOR WRITING GRATINGS INTO AN OPTICAL FIBER**
VERFAHREN UND STEUERSYSTEM ZUR STEUERUNG EINES VERFAHRENS ZUM SCHREIBEN VON GITTERN IN EINE OPTISCHE FASER
PROCÉDÉ ET SYSTÈME DE COMMANDE D'UN PROCESSUS D'ÉCRITURE DE RÉSEAUX DANS UNE FIBRE OPTIQUE

(43) Date of publication of application: 27.04.2022
(73) Proprietor: AIP Leibniz-Institut für Astrophysik, 14482 Potsdam (DE)
(72) Inventor: Günther, Alan, Dr., 14467 Potsdam (DE)
(74) Representative: Heinemeyer, Karsten

(56) References cited:
- WO-A1-01/04676
- WO-A1-2017/147775
- WO-A2-03/104860
- US-A1- 2006 093 265
- US-A1- 2006 133 728

## Description

The present invention relates to a method and a control system for controlling a process for writing gratings into an optical fiber. Control signals are transmitted to a laser source and/or to a light guiding means via at least one interface in such a way, that as well a fiber-position tracking subsystem as a laser-beam alignment system are operated.

Today, optical signal transmission plays an important role in many technical fields, especially in telecommunication, optics as well as in medical and laser technology. Moreover, it found its way into astronomical applications.

Optical fibers are mostly made from silica glass. However, other glass materials are used for certain applications, and plastic optical fibers can be used for short distance applications, where the low transmissivity outweighs other beneficial properties. Usually, optical fibers include a core surrounded by a cladding material with a lower index of refraction. Light is guided through the fiber by the phenomenon of total internal reflection, which causes the fiber to act as waveguide. Optical fibers that support many propagation paths or transmit many modes within a certain wavelength range are called multimode fibers, whereas those fibers that support a single mode are called single mode fibers.

By writing periodic modulations of the refractive index into a fiber, it is possible to implement fundamental optical components like mirrors or wavelength filters, etc. into fiber optics components. Refractive index modulations of such a kind are called fiber Bragg gratings.

For some technical applications it is important to integrate blocking filters for specific wavelengths into an optical fiber. In astronomy, complex fiber Bragg gratings, are used in terrestrial instruments to block specific spectral lines in the infrared that occur due to thermal radiation of gas molecules in the atmosphere. The intensity of these molecular vibration lines is many times higher than the intensity of the observed starlight and would thus cover the light of the stars to be observed. By choosing the right Bragg-grating parameters these very well-known lines can be filtered out.

Besides the use as optical filters, fiber Bragg gratings can be found in sensors e.g. to measure mechanical strain or stress, temperature and chemical compositions etc..

The writing of permanent gratings in optical fibers was first introduced by Hill et. al. in 1978 at the Canadian communication research centre, Ottawa, Canada. Here, fiber Bragg gratings were fabricated using internal writing as described in "Y. Kawasaki, K. O. Hill, Narrow-band Bragg reflectors in optical fibers, Opt. Letters 3 (1978) 66-68". Alternatively, holographic techniques as disclosed in "W. Meltz, W. Morey, Formation of Bragg grating in optical fibers by a transverse holographic method, Opt. 14, (1989) 823-825" were used.

Subsequently, both methods mentioned before have been superseded by the phase mask technique, where an appropriate mask which is transparent for UV radiation is used. This technical solution is described in "K. O. Hill, B. Malo, J. Albert, Bragg grating fabrication in monomode photosensitive optical fiber by UV exposure through a phase mask, appl. Phys. Lett. 62 (1993) 1035-1037".

Furthermore, US 2006/093265 describes a method for controlling a process for writing gratings into an optical fiber comprising the steps of guiding at least two excitation laser beams on and/or into the optical fiber, receiving reflected radiation due to the impact of the at least two excitation laser beams, and evaluation of the reflected radiation and determining the focal points of the at least two excitation laser beams.

As already shown, fiber gratings, especially fiber Bragg gratings, can be fabricated in many ways. Today the major techniques are to directly write them into an optical fiber using femtosecond lasers or interferometric methods.

In both methods, the UV radiation has a comparatively low intensity which means lower requirements for the laser source.

The aforementioned interferometric techniques can be applied to all UV-sensitive fibers.

A technical solution uses two highly focused coherent ultraviolet (UV) laser beams which are superimposed in the core of an optical fiber, whereat the phases of the light is changed continuously by the use of optical phase modulators. The goal is to create an interference pattern in the common focus, which moves through the continuous phase change. If the fiber is moved, in principle it is possible to produce gratings of any length. By tuning the ratio of the speed of the fiber movement to the laser writing speed, it is also possible to set different lattice spacings. To write gratings using the technique indicated before, two highly focused laser beams of very small focus diameters, usually less than 10 µm, need to be overlapped. This superposition is a technical challenge requiring specific tools. In addition, the core of the optical fiber must be fixed within the common focus of the writing beams during the writing process. If an optical fiber is not sufficiently fixed during the writing process, erroneous movements may occur, which move the fiber away from the optimal writing position. Moreover, due to the fixation of an optical fiber during a writing process the fiber is under tension. Because of this, after relaxation the lattice spacings of the gratings are reduced and may are out of tolerance. Therefore, often a constant force by e.g. fixing a weight to the fiber is used to keep the tension constant and to compensate relaxation related errors during the writing process. Nevertheless, vibrations of this weight can lead to a stress variation, and therefore to a defective grating.

The instant invention is directed to the problem of how to overcome some or all the problems known from the prior art, and to provide a simplified focus detection mechanism. One objective of the invention to provide a method as well as a control system to determine, adjust and/or control the position of optical paths of the writing laser beams, especially their focal points, inside the optical fiber. In addition, a precise control and adjustment of the focal points in the micrometer and submicrometer range should be possible. Furthermore, as well a simplified adjustment of the focus overlap as a direct optical feedback, e.g. on a display, a monitor, or any other suitable visual display device, should be feasible.

Another objective of the invention is, that changes of the fiber position in relation to the writing beams and their focal points, respectively their foci, should be detected and adjusted comparatively easy. In addition, a technical solution according to the invention should ensure that gratings can be written into relaxed fibers with a high accuracy. Finally, the invention should be realisable by using comparatively simple and cost-efficient elements and/or process steps.

The objectives mentioned above are met by a method according to claim 1 as well as with a control system according to claim 9.

Preferred embodiments of the invention are disclosed in the dependent claims and will be explained in detail in the following description. Additionally, certain specific embodiments of the invention are explained with the help of drawings.

The invention is based on a method for controlling a process for writing gratings into an optical fiber comprising the steps of
- guiding at least two excitation laser beams on and/or into the optical fiber,
- receiving reflected radiation due to the impact of the at least two excitation laser beams,
- evaluation of the reflected radiation and determining the focal point of the at least two excitation laser beams,
- determining and/or adjustment of the position of the optical fiber with respect to the focal points of the at least two excitation laser beams,
- guiding said at least two excitation laser beams on and/or into the optical fiber in such a way that fluorescence radiation is excited,
- receiving and evaluation of said fluorescence radiation, and
- localising the focal points of the at least two excitation laser beams in consideration of said evaluation of the fluorescence radiation and adjustment of an propagating path of at least one of said excitation laser beams considering said focal points in such a way that the focal points of the at least two excitation laser beams overlap inside the core of the optical fiber.

The main idea of the invention is to combine process steps for monitoring and controlling the movement of an optical fiber with process steps for the alignment of at least two laser beams writing a grating into an optical fiber. By combining the aforementioned process steps, it is possible to as well precisely change the fiber position as to determine the focal points of the at least one excitation laser. To determine the position of the optical fiber a first laser beam is sent in and/or into an optical fiber and light reflected by the optical fiber is received and evaluated. As far as the focus of the first laser beam hits an interface between different materials, e.g. an interface between the cladding and the core or between the cladding and air, light is reflected due to change of refractive index. The reflection of light and its intensity is monitored as to track the position of the optical fiber with respect to the focal point. With the help of this information a control loop can be realized to adjust the position of the fiber with respect to the first laser beam and/or to at least one writing laser beam for writing a grating into the optical fiber.

In addition, the method according to the invention comprises steps for the determination of the focal point of at least one excitation laser beam, consisting of either the first laser beam and at least one additional laser beam or only one additional laser beam, whereat the at least one excitation laser beam is preferably used as writing laser. The at least one excitation laser beam excite the optical fiber to emit fluorescence radiation, which is then evaluated to determine the focal point of the at least one excitation laser and, if at least two excitation lasers are used, to overlap the foci. Thus, the focal point of the at least one excitation laser is precisely detected by the evaluation of the fluorescence radiation, preferably in consideration of the intensity of the fluorescence radiation.

According to a preferred embodiment of the invention at least one excitation laser emits ultraviolet (UV) light. Preferably at least two excitation lasers emit ultraviolet light and it is conceivable, that the wavelength of the excitation laser beams is chosen to let the optical fiber emit fluorescence radiation. Alternatively or in addition, at least one material is integrated into the optical fiber, which comprises fluorescence properties.

In any case, the optical fiber is preferably made of glass or a polymer. Alternatively, it is conceivable that at least one excitation laser not emitting ultraviolet (UV) light as well as a polymer optical fiber, which emits fluorescence radiation due to the irradiated light, are used.

Preferably the focal point of the at least one excitation laser is displayed on a monitor, a display and/or any suitable visual display device. Advantageously the focal point is localised within the fiber as a camera records the fluorescence radiation and transmits an appropriate measuring signal to an evaluation unit comprising a data processing unit for a measuring signal processing and for generating at least one control signal. This control signal preferably is used to trigger at least one laser unit and/or the laser beam guiding means so that the foci of the at least two excitation laser beams are overlapped.

Furthermore, it is conceivable that at least one objective, e.g. a microscope objective, and/or at least one lens is used to guide the fluorescence radiation onto the detector, especially into a camera. Advantageously, the objective and/or lens is designed and arranged in a way, to focus the beams of the fluorescence radiation onto the detector. Again, the detector is coupled by wire or wireless to an evaluation unit for processing the measuring signal and for generating a control signal, which is transmitted to a beam-alignment unit to adjust the optical paths of the excitation laser beams so that their foci overlap.

According to another specific embodiment of the invention the reflected radiation is received by a camera, which is preferably coupled by wire or wireless to an evaluation unit for processing a measuring signal related to at least one property of the reflected radiation and for generating a control signal, which is transmitted to a fiber-movement unit to move the optical fiber. In this context, it is favourable to move the optical fiber in such a way, that two foci of the fluorescence radiation are arranged within the core of the optical fiber. As far as the two foci overlap within the core of the optical fiber a fiber grating, e.g. a fiber Bragg grating, can be produced very precisely.

Furthermore, it is conceivable, that the reflected radiation and/or the fluorescence radiation is received by a detector, especially a camera, and evaluated in such a way, that at least one reference point representing a specific position of the optical fiber is determined.

In a further option of the invention reflected radiation and/or the fluorescence radiation at least partially propagates through a pinhole before being received by a photodiode. According to this technical solution the detector is arranged behind a pinhole, and preferably at the focus of a projection lens. With this arrangement the optimal overlap of the two excitation laser beams is achieved, when the intensity at the detector is maximum. The advantage of this setup is, that the correct focal point of the two excitation laser beams, preferably UV laser beams, is directly related to the intensity of the fluorescence radiation.

However, it is also conceivable that the reflected radiation as well as the fluorescence radiation is received by a camera and that an appropriate measuring signal is evaluated by an evaluation unit in such a way, that a reference point to determine a specific position of the optical fiber in relation to the excitation laser beams is defined. This reference point and/or the information about specific position of the optical fiber in relation to the excitation laser beams can be used to correct the position of the optical fiber and/or the alignment of the optical paths of the at least one excitation laser beam, and if at least two excitation laser beams are used that the foci of the excitation laser beams overlap inside a core of the optical fiber and the desired fiber grating can be written into the optical fiber.

According to a very specific embodiment of the invention light of the at least one first laser beam and or of the at least one additional laser beam is focused and/or polarized before said laser beam strikes the optical fiber. Here, the guiding and/or polarization of the at least one effected laser beam is performed in such a way, that the evaluation of reflected and/or fluorescence radiation to determine the respective focal point is realized in a very effective and accurate manner.

In a further embodiment a dichroic mirror is integrated into the means for guiding at least one laser beam and/or the reflected and/or fluorescence radiation. According to a particularly suitable set up the fiber-position tracking subsystem and the laser-beam alignment subsystem are combined by the help of at least one dichroic mirror. Advantageously, the dichroic mirror is placed in the optical path between the optical fiber and at least one laser unit, preferably the laser unit of the fiber-position tracking subsystem emitting the first laser beam, which is at least partially reflected by the optical fiber. Here, the dichroic mirror serves as well to guide the laser beam emitted by the laser unit of the fiber-position tracking subsystem, thus acting as a positioning laser unit, into the direction of the optical fiber as to let the fluorescence radiation emitted by the optical fiber pass through.

Besides, it is conceivable, that the light guiding means further comprises a beam splitter arranged in the optical path between the dichroic mirror and the optical fiber. This beam splitter guides the radiation reflected by the optical fiber to a detector, especially into a camera.

If a microscope objective is used to receive reflected and/or fluorescence light from the optical fiber, this microscope objective is advantageously arranged in the optical path between the optical fiber on one side and the at least one camera and the at least one other component of the light guiding means like beam splitter, dichroic mirror and/or lens on the other side. Furthermore, it is conceivable to arrange a lens in front of the detector, especially a camera or a photodiode, which guides light at least partially onto the detector. The lens is preferably designed as convex, concave and/or astigmatic lens. An astigmatic lens is preferably used to enable the determination of changes of the position of the optical fiber along the optical path of the first laser beam, which is reflected by the optical fiber.

Furthermore, advantageously a UV band-pass filter is arranged in the optical path between the optical fiber and the respective objective and/or lens as to prevent fluorescence radiation from hitting the reflector. Regarding this technical solution it is also conceivable, that the objective and/or lens is being provided with an appropriate ultraviolet (UV) radiation blocking coating.

In addition, the invention relates to a control system for a laser unit writing gratings into an optical fiber. The control system has at least one interface for a laser source and/or at least one light guiding means, and comprises a fiber-position tracking subsystem with an optical detector for receiving radiation reflected from the optical fiber due to the impact of at least two laser beams, and an evaluation unit designed to determine the focal points of the at least two laser beams and to generate a focus related positioning-control signal. Furthermore, the control system comprises a movement unit designed to move the optical fiber at least temporarily based on said positioning-control signal. In addition to the fiber-positioning tracking subsystem the control system according to the invention comprises a laser-beam alignment subsystem with an optical detector for receiving fluorescence radiation emitted by the optical fiber due to the impact of the at least two excitation laser beams , with an evaluation unit designed to determine the focal points of the at least two excitation laser beams and to generate an alignment-control signal. Furthermore, the laser-beam alignment system comprises an alignment unit to adjust the optical paths of said at least two excitation laser beams based on said alignment-control signal, whereas the adjustment of their optical paths is based on an overlapping of their focal points. Again, the control system according to the invention consists of two subsystems, namely a fiber-position tracking subsystem and a laser-beam alignment sub-system. Because of this combination of two specific subsystems it is possible to write gratings into an optical fiber, whereat changes of the position of different lasers in use relative to the fiber are precisely controllable and the movement of the fiber as well as the orientation of the laser-beams can be adjusted very fast and accurate. The technical solution according to the invention provides a direct optical feedback on the respective focal points of different lasers and on the position of the optical fiber.

Here, the at least two laser beams are reflected by the optical fiber and serve to determine the position of the fiber in relation to the laser beams. It is detected whether or not reflection occurs, whereat intensity changes are comparatively easy to detect and to evaluate as to generate appropriate positioning-control signals for a control loop to correct the position of the optical fiber with respect to the focal points of the at least two excitation lasers, which according to the invention serve as writing lasers. The evaluation of the reflected radiation provides a very precise positioning of the fiber and is therefore very helpful for the successful realization of the second subsystem, namely the laser-beam alignment subsystem.

According to a preferred embodiment of the invention a position of at least one light beam of the reflected laser beam with respect to the detector, e.g. a camera, is determined. If the optical fiber is arranged in a correct position retroreflection of the first laser beam occurs as to the reflected laser beam hits the detector in a position, which corresponds to a position of an incident point or reference point determined by a reference measurement executed when the fiber is aligned before the writing process is started. In contrast, if the optical fiber is misaligned the reflected radiation hits the detection surface not at the reference point, consequently being the position of an incident point determined by a reference measurement. According to this technical solution the position of the reflected radiation with respect to a reference point on the detection surface is evaluated as to readjust the position and/or orientation of the optical fiber, if necessary.

In a preferred embodiment of the invention, with the help of the laser-beam alignment subsystem the focal points of the at least two excitation lasers, also serving as writing lasers, are precisely overlapped inside the core of the exactly positioned optical fiber. Due to the impact of the at least two excitation lasers the fiber is excited to emit fluorescence radiation. Here, the fluorescence is directly dependent on the power density of the excitation lasers beams inside the fiber. Advantageously, the focal points of the excitation laser are clearly detectable by measuring the intensity of the fluorescence radiation emitted by the optical fiber. Preferably, an objective, especially a microscope objective, is used to collimate the fluorescence radiation emitted by the optical fiber. Furthermore, according to another preferred embodiment of the invention the collimated light is then focused by a lens, preferably by a projection lens, onto a detector, e.g. a camera. The appropriate measuring signal is transmitted to an evaluation unit for data processing and generating an alignment-control signal. Based on this alignment-control signal, the propagating paths of the at least two excitation laser beams are adjusted in such a way, that their focal points precisely overlap inside the optical fiber as to write the desired fiber grating

In a preferred embodiment of the invention the detector comprises a camera and/or a photodiode. Furthermore, it is conceivable, that at least one objective, e.g. a microscope objective, a lens and/or a beam splitter is arranged between the optical fiber and one of the detectors receiving reflected radiation and/or the fluorescence radiation.

A further specific set up of the control system according to the invention comprises at least one dichroic mirror, which is arranged between a laser unit, especially a laser unit emitting the first laser beam to be reflected, and a beam splitter. By using a dichroic mirror, it is possible to combine the fiber-position tracking subsystem and the laser-alignment subsystem in a very efficient manner. When arranged on one side of the optical fiber, for example opposite to the at least one laser unit emitting the excitation laser beams, it is possible, that the dichroic mirror guides the first laser beam emitted by a laser unit which can be called positioning laser unit, in the direction of the optical fiber and allows simultaneously the fluorescent radiation emitted by the optical fiber to pass through.

According to a further embodiment of the invention a beam splitter, preferably a 50 : 50 beam splitter, is arranged between the optical fiber and the detector for reflected radiation and on the same side of the optical fiber as the dichroic mirror. To this end, the first laser beam is sent through the beam splitter and focused onto the optical fiber, preferably by a microscope objective. In another arrangement, the first laser beam is polarized and in addition a polarizing beam splitter is used. After passing a quarter wave foil the light is circularly polarized. When this light is reflected by the optical fiber and passes the quarter wave foil in the reverse direction the polarization is rotated by 90° with respect to the incident light. Therefore, this light is diverted by the polarizing beam splitter very efficiently.

Furthermore, it is conceivable to have at least one lens, for example a projection lens guiding reflected radiation and/or fluorescence radiation onto the appropriate detector. In this context, to prevent fluorescence of the at least one optical component, like a lens, a beam splitter or a dichroic mirror, as a result of the irradiation with ultraviolet light it seems reasonable to implement a filter for filtering ultraviolet light between the optical fiber and at least one optical component.

Advantageously, the evaluation unit and the beam alignment unit are designed to superimpose the at least two excitation laser beams in such a way, that the focal points, respectively their foci of the excitation laser beams overlap inside a core of the optical fiber.

Further features properties and advantages of the present invention will become clear from the following description of embodiments in conjunction with the accompanying drawings. The embodiments do not limit the scope of the present invention which is determined by the independent claims.
- Fig. 1:: Schematic view of a fiber-positioning tracking subsystem suitable to be used for realizing the method and/or the control system according to the invention;
- Fig. 2:: Schematic view of a first embodiment of an UV-laser-beam alignment subsystem suitable to be used for realizing the method and/or the control system according to the invention;
- Fig. 3:: Schematic view of a second embodiment of an UV-laser-beam alignment subsystem suitable to be used for realizing the method and/or the control system according to the invention to good slide to follow laser beam alignment subsystem
- Fig. 4:: Schematic view of a control system according to the invention

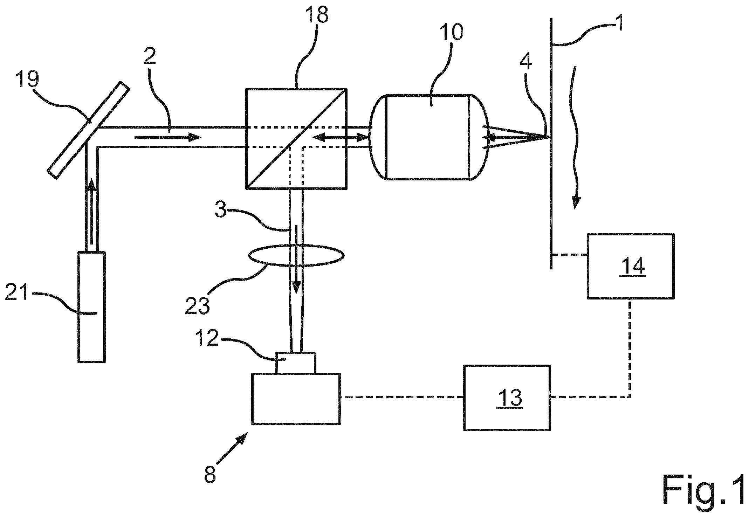

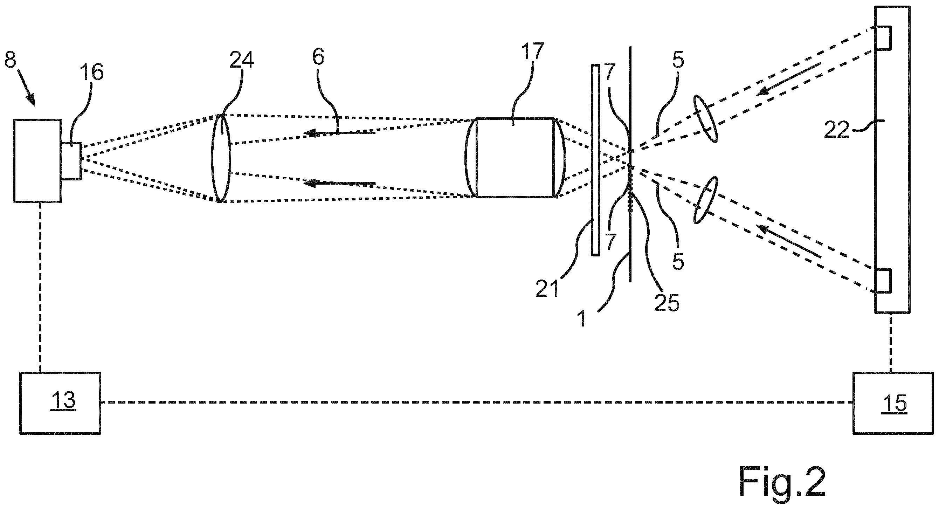

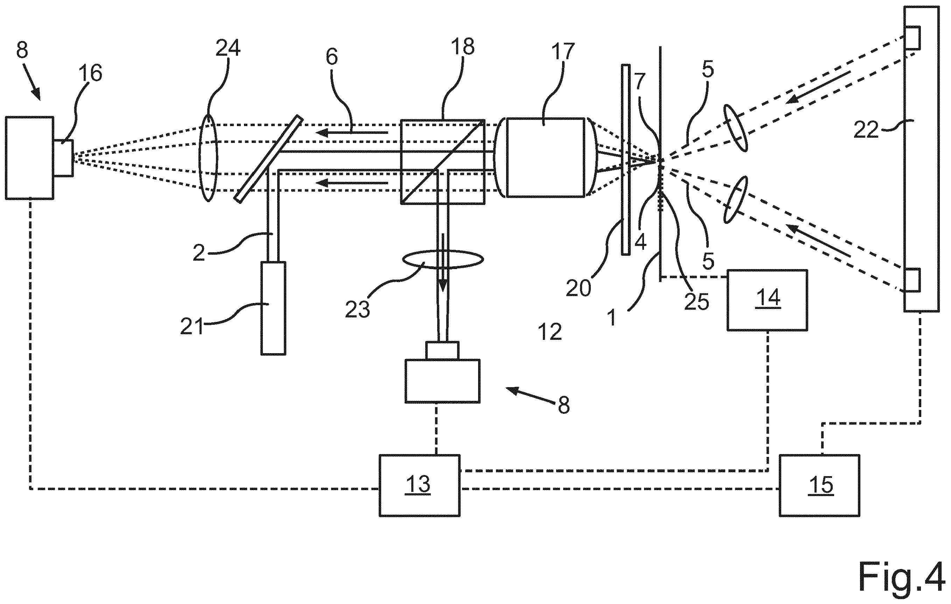

Fig. 1, 2 and 3 each show a schematic view of a subsystem suitable to be used for realizing the method and/or the control system 11 according to the invention. In addition, fig. 4 shows a schematic view of a control system 11 according to the invention, which combines the fiber-positioning tracking subsystem shown in fig. 1 with the UV-laser-beam alignment subsystem shown in fig. 2. The control system 11 is connectable to a laser unit (22) for writing gratings, e.g. fiber Bragg gratings, into an optical fiber 1 and comprises at least one interface to be connected with at least one laser source and/or at least one light guiding means.

Fig. 1 shows a schematic view of a fiber-positioning tracking subsystem, which can be used as one part of a control system 11 according to the invention. This subsystem using a focused laser beam serves to precisely determine the fiber position in the micrometer and submicrometer range.

The fiber-positioning tracking subsystem comprises a laser unit 21 emitting a first laser beam 2 which is firstly directed onto a dichroic mirror 19. The functionality of the dichroic mirror 19 will be explained with respect to the embodiment shown in fig. 4 in more detail. From the dichroic mirror 19 the first laser beam 2 is sent through a beam splitter 18 and is focused on an optical fiber 1. As far as the focus of the first laser beam 2 hits an interface at which the reflective index changes, e.g. between the cladding and the core or between the cladding and the air, a least a part of the light is reflected by the optical fiber 1 and guided through the microscope objective 17, the beam splitter 18 and a projection lens 23 into a camera 8, which according to this embodiment is used as detector 12. The camera 8 continuously monitors a part of the reflected radiation 3 which propagates perpendicular to the first laser beam 2 and generates a measuring signal which is transmitted to an evaluation unit 13 as to evaluate at least one property of the reflected radiation 3. The camera image of the reflected radiation depends very much on the position of the focal point 4 of the first laser beam 2 on or inside the optical fiber 1. Here, a position of the reflected light beam with respect to the detector surface of a camera is determined. If the optical fiber is arranged in a correct position retroreflection of the first laser beam occurs as to the reflected laser beam hits the detector surface in a position, which corresponds to a position of an incident point or reference point determined by a reference measurement executed when the fiber is aligned before the writing process is started.

In contrast, if the optical fiber is misaligned the reflected radiation hits the detection surface not at the reference point, consequently being the position of an incident point determined by a reference measurement. According to this technical solution the position of the reflected radiation with respect to a reference point on the detection surface is evaluated as to readjust the position and/or orientation of the optical fiber, if necessary. Thus, intensity changes, changes of the position of reflected laser beam and/or changes of images captured by the camera are detected by the evaluation unit 13, which generates a positioning-control signal based on the changes determined. The positioning-control signal can then be transmitted by wire or wireless to a movement unit 14 for positioning the optical fiber 1. Here, if necessary, the position of the optical fiber 1 is, as explained in connection with fig. 4 in detail, adjusted with respect to the writing focus of the writing laser beams used for the fabrication of a fiber Bragg grating inside the optical fiber 1. The evaluation unit 13 as well as the movement unit 14 are designed in such a way that the fiber adjustment can be realized in two dimensions, namely perpendicular to the incoming first laser beam 2 as well as along the propagating axis of the first laser beam 1. Preferably, in a first step the optical fiber is correctly aligned with the help of the fiber-positioning tracking subsystem described above. Then, in a second step the excitation laser beams are adjusted to overlap their focus positions inside the optical fiber and to write the desired fiber grating by using the UV-laser-beam alignment subsystem according to the invention.

Fig. 2 shows a schematic view of a first embodiment of an UV-laser-beam alignment subsystem suitable to be used for realizing the method and/or the control system 11 according to the invention. The subsystem according to the embodiment shown is used to adjust the focal points 7 of at least two writing laser beams or excitation laser beams 5 as to fabricate desired fiber Bragg gratings inside the core of an optical fiber.

From the prior art it is already known to write fiber gratings into an optical fiber 1 by superposing two writing UV laser beams within the optical fiber 1. According to the embodiment shown in fig. 2 the UV-laser-beam alignment subsystem adjust the focal points 7 of the writing or excitation laser beams 5 very fast and precisely. This technical solution is based on the idea, that the at least two writing lasers excite the optical fiber 1 as to emit a fluorescence radiation 6. Therefore, in the following, the laser beams emitted by the writing lasers are indicated as excitation laser beams 5. As shown in fig. 2 the writing laser unit 22 comprises two writing lasers each emitting an excitation laser beam 5 in the direction of the optical fiber 1. When irradiated with the UV light of the excitation laser beams 5 the optical fiber 1 emits fluorescence radiation 6, whereat the fluorescence radiation 6 is directly dependent on the intensity of the irradiated UV light. Hence, the two focal points 7 can be localized within the fiber 1 by monitoring and evaluating the fluorescence radiation 6.

According to fig. 2 fluorescence radiation 6 emitted by the optical fiber 1 is guided through a microscope objective 17 and a projection lens 24 as to be recorded by a camera. To prevent fluorescence caused by the UV irradiation, a UV band pass filter 20 is implemented in the optical path behind the optical fiber 1.

The camera 8 generates a measuring signal, respectively an image corresponding to the properties, especially the intensity, of the fluorescence radiation 6 received. In addition, the camera 8 is connected to an evaluation unit 13, which receives and evaluates the measuring signal and/or the image. Based on this evaluation the focal points 7 of the excitation laser beams 5 are determined and an appropriate alignment-control signal is generated and then transmitted to a beam-alignment unit 15. This alignment-unit 15 is designed to adjust the propagating path of the excitation laser beams 5 in such a way, that the focal points 7 of the two excitation laser beams 5 precisely overlap.

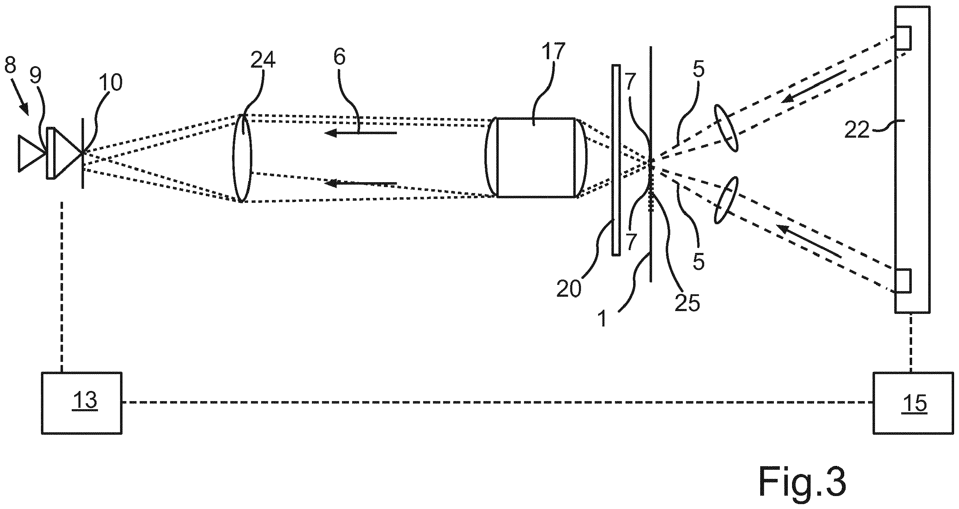

In addition, fig. 3 shows an alternative embodiment of an UV-laser-beam alignment subsystem which is suitable to be used with the invention. In contrast to the embodiment shown in fig. 2 the fluorescence radiation 6 is focused on a photo diode 9 acting as a detector 16 instead of a camera 8 and arranged behind a pinhole 10. The light guiding means for guiding the fluorescence radiation 6 emitted by the optical fiber 1 onto the detector 16 again comprises a microscope objective 17 and a projection lens 24. To prevent fluorescence of the projection lens 24 caused by the UV irradiation, a UV-filter 20 is implemented in the optical path behind the optical fiber 1.

The photodiode 9 is arranged behind the pinhole 10 and at the focal point of the projection lens 24. According to this specific embodiment, the optimum overlap of the focal points 7 of the two excitation laser beams 5 is achieved when the intensity at the detector 16 is maximum. The advantage of the embodiment shown in fig. 3 in comparison to the embodiment shown in fig. 2 is, that the correct focus position of the two excitation laser beams 5 is directly and linearly related to the intensity of the fluorescence radiation 6.

Finally, as mentioned above, fig. 4 shows a control system 11 according to the invention. This control system 11 combines a fiber-position tracking subsystem as shown in fig. 1 with a laser-beam alignment subsystem as shown in fig. 2. Alternatively, the subsystem of fig. 1 could be combined with the embodiment according to fig. 3 as to realize the invention.

The control system 11 schematically shown in fig. 4 is suitable to control a process and/or a laser unit 22 for writing a fiber grating 25, especially a fiber Bragg grating, into an optical fiber 1. Here, to write a fiber Bragg grating into an optical fiber 1 two highly focused ultraviolet (UV) laser beams 5 are superimposed. In order to realize a fast variation of the local lattice spacings, it is necessary to move the optical fiber 1. At the same time, the interference pattern is moved continuously by changing the phase relationship of the two excitation laser beams 5 emitted by the writing laser unit 22. Tuning the relation between the fiber movement and the movement of the interference pattern, the lattice spacings of the inscribed fiber Bragg grating can finally be adjusted. To precisely control the lattice spacings, the overlapping excitation laser beams 5 need to be well focused. As a result, high accuracy in the micrometer or submicrometer range is required with respect to the adjustment of the overlapping focal points 7. Moreover, since the optical fiber 1 is moved during the writing process, changes of the focal points 7 of the excitation laser beams 5 relative to the optical fiber 1 which occur while the fiber 1 is moved must be readjusted in order to keep the interference pattern always in the correct position within the core of the optical fiber 1.

In any case, the goal is to create an interference pattern in the common focus, that moves because of the continuous phase changes. As the fiber 1 is moved at the same time, the fiber Bragg grating can, in principle, be written as long as desired. By tuning the speed ratio of the fiber movement to the grating movement it is also possible to set different lattice spacings.

According to the technical solution described here, with the control system 11 shown in fig. 4 two highly focused laser beams 5 of very small focus diameter, usually smaller than 10 µm, are controlled, which need to be precisely overlapped to write fiber Bragg gratings into an optical fiber 1. The control system 11 shown in fig. 4 comprises two subassemblies that are combined. Here, one of the subsystems serves to accurately detect and adjust the fiber position in a micrometer or submicrometer range. This fiber-position tracking subsystem corresponds to the system shown in fig. 1. A first laser beam 2 is sent through a beam splitter 18 and focused onto the optical fiber 1 with a microscope objective 17. If the focus of the first laser beam 2 hits an interface at which the refractive index changes, for example between the cladding and the core or between the cladding and air, the irradiated light is partially reflected. Whether or not reflection occurs is detected with the help of a camera 8, acting as detector 12, and an evaluation unit 13 connected by wire or wireless to the camera 8. The camera 8 continuously monitors a part of the reflected radiation 3 orientated perpendicular to the first laser beam 2 propagating in the direction of the optical fiber 1. The camera 8 generates a measuring signal, respectively an image of the reflected radiation, which depends very much on the position of the focal point 4. Intensity changes are detected and evaluated by the evaluation unit 13 connected to the camera 8. Thus, the position of the optical fiber 1 can be determined very precisely as well as an appropriate positioning control signal can be generated and transmitted to a movement 14 unit as to correct the position of the fiber 1 with respect to the focal points 7 of the excitation laser beams 5 emitted by the writing laser unit 22.

This adjustment of the fibers' 1 position can be realized in two dimensions, either perpendicular to the first laser beam 2 or along the laser axis.

The second subsystem used for the control systems 11 shown in fig. 4 corresponds to the laser-beam alignment subsystem shown in fig. 2. According to this specific embodiment the detector 16 for receiving fluorescence radiation 6 is a camera 8 instead of a photodiode 19 arranged behind a pinhole 10. The laser-beam alignment subsystem adjusts the focal points 7 of the two excitation laser beams 5 which are overlapped to write fiber gratings 25 into the optical fiber 1. When the excitation laser beams 5 strike the fiber 1 fluorescence radiation 6 is emitted. This fluorescence radiation 6 depends directly on the intensity of the excitation laser beams' 5 light. Hence, the focal points 7 of the excitation laser beams 5 within the fiber 1 are localized by monitoring and evaluating the fluorescence radiation 6 with a camera 8 connected to an appropriate evaluation unit 13.

The fluorescence radiation is guided through a microscope objective 17 and a projection lens 24 and focused into the camera 8, which generates a measuring signal. The measuring signal is generated in consideration of properties and/or property changes, e.g. changes of the position of reflected laser beam and/or changes of images captured by the camera. The measuring signal and/or the image is transmitted to an evaluation unit 13 for data processing. Based on this data processing the evaluation unit 13 generates an alignment-control signal, which is transmitted to a laser-beam alignment unit 15 as to adjust the propagating paths of the excitation laser beams 5 in such a way, that the focal points 7 of the two excitation laser beams 5 precisely overlap. The technical solution described here gives a direct optical feedback and a comparatively easy possibility to overlap the focal points 7 of the laser excitation beams 5.

To prevent fluorescence caused by the UV irradiation, a UV-filter 20 is implemented in the optical path behind the optical fiber 1.

By the combination of the fiber-position tracking subsystem and the laser-beam alignment subsystem in addition to the implementation of an evaluation unit 13 as explained above, changes of the focal points 7 of the two excitation laser beams 5 relative to the optical fiber 1, which may occur during the writing process due to the movement of the fiber 1, can be readjusted fast and precisely. This ensures that the interference pattern is always correctly positioned within the core of the optical fiber 1 as to write the desired fiber grating.

### List of reference numbers

- 1: optical fiber
- 2: first laser beam
- 3: reflected radiation
- 4: focus point of the first laser beam radiation
- 5: excitation laser beam
- 6: fluorescence radiation
- 7: focal point of the excitation laser beam
- 8: detector
- 9: photodiode
- 10: pinhole
- 11: control system
- 12: camera of the fiber-position tracking subsystem
- 13: evaluation unit
- 14: movement unit
- 15: laser-beam alignment unit
- 16: detector-unit of the laser beam alignment subsystem
- 17: objective
- 18: beam splitter
- 19: dichroic mirror
- 20: UV filter
- 21: laser unit of the fiber-position tracking subsystem
- 22: laser unit of the laser beam alignment subsystem
- 23: projection lens of the fiber-position tracking subsystem
- 24: projection lens of the UV-laser beam alignment subsystem
- 25: fiber grating

## Claims

1. Method for controlling a process for writing gratings (25) into an optical fiber (1) comprising the steps of:
- guiding at least two excitation laser beams (5) on and/or into the optical fiber (1),
- receiving reflected radiation (3) due to the impact of the at least two excitation laser beams (5),
- evaluation of the reflected radiation (3) and determining the focal points (7) of the at least two excitation laser beams (5),
- determining and/or adjustment of a position of the optical fiber (1) with respect to the focal points (7) of the at least two excitation laser beams (5),
**characterized by** the steps of:
- guiding said at least two excitation laser beams (5) on and/or into the optical fiber (1) in such a way that fluorescence radiation (6) is excited,
- receiving and evaluation of said fluorescence radiation (6), and
- localising the focal points (7) of the at least two excitation laser beams (5) in consideration of said evaluation of the fluorescence radiation (6) and adjustment of an orientation of said excitation laser beams (5) considering said focal point (7) in such a way that the focal points of the at least two excitation laser beams (5) overlap inside a core of the optical fiber (1).

2. Method according to claim 1,
**characterized in that** the optical fiber (1) is fluorescent and/or at least one fluorescent material is integrated into the optical fiber (1).

3. Method according to claim 1 or 2,
**characterized in that** the focal points (7) of the at least two excitation lasers beams (5) are displayed on a visual display device.

4. Method according to at least one of the preceding claims,
**characterized in that** the optical fiber (1) is at least temporarily moved.

5. Method according to at least one of the preceding claims,
**characterized in that** the reflected radiation (3) and/or the fluorescence radiation (6) is received by a camera (8) and/or a photodiode (9).

6. Method according to at least one of the preceding claims,
**characterized in that** the reflected radiation (3) and/or the fluorescence radiation (6) at least partially propagates through a pinhole (10) before being received by a photodiode (9)

7. Method according to a least one of the preceding claims,
**characterised in that** the reflected radiation (3) and/or the fluorescence radiation (6) is received by a camera (8) and evaluated in such a way, that a reference point representing a specific position of the optical fiber (1) is determined.

8. Method according to at least one of the preceding claims,
**characterised in that** light of the at least two excitation laser beams (5) is focused and/or polarized before said laser beams (5) strike the optical fiber (1).

9. Control system for a laser unit for writing gratings (25) into an optical fiber with at least one interface for connecting to a laser source and/or light guiding means, which comprises a fiber-tracking subsystem with an optical detector (12) for receiving radiation (3) reflected from the optical fiber (1) due to the impact of at least two excitation laser beams (5), an evaluation unit (13) designed to determine the focal points (7) of the at least two excitation laser beams (5) and to generate a positioning-control signal and a movement unit (14) designed to at least temporarily move the optical fiber (1) on the basis of said positioning-control signal, and which comprises a laser-beam alignment subsystem with an optical detector (16) for receiving fluorescence radiation (6) emitted by the optical fiber (1) due to the impact of the at least two excitation laser beams (5), **characterized by** an evaluation unit (13) designed to determine the focal points (7) of the at least two excitation laser beams (5) in consideration of said fluorescence radiation (6) and to generate an alignment-control signal and by a beam-alignment unit (15) designed to adjust a propagating path of said excitation laser beams (5) on the basis of said alignment-control signal, wherein the evaluation unit (13) and the beam-alignment unit (15) are designed to superimpose the at least two excitation laser beams (5) in such a way that the focal points (7) of the excitation laser beams (5) overlap inside a core of the optical fiber (1).

10. Control system according to claim 9,
**characterised in that** the optical detector (12, 16) for receiving reflected radiation (3) or fluorescence radiation (6) comprises a camera (8) and/or a photodiode (9).

11. Control system according to claim 9 or 10,
**characterised in that** at least one objective (17) and/or one beam-splitter (18) is arranged between the optical fiber (1) and at least one of the detectors (12, 16).

12. Control system according to at least one of the claims 9 to 11,
**characterised in that** at least one dichroic mirror (19) is arranged between at least one laser unit (21, 22) and the optical fiber (1).

## Patentansprüche

1. Verfahren zur Steuerung eines Prozesses zum Schreiben von Gittern (25) in eine optische Faser (1), welches folgende Schritte umfasst:
- Führen von mindestens zwei Anregungslaserstrahlen (5) auf und/oder in die optische Faser (1),
- Empfangen von reflektierter Strahlung (3) aufgrund des Auftreffens der mindestens zwei Anregungslaserstrahlen (5),
- Auswerten der reflektierten Strahlung (3) und Bestimmen der Brennpunkte (7) der mindestens zwei Anregungslaserstrahlen (5),
- Bestimmen und/oder Einstellen einer Position der optischen Faser (1) in Bezug auf die Brennpunkte (7) der mindestens zwei Anregungslaserstrahlen (5),
**gekennzeichnet durch** folgende Schritte:
- Führen der mindestens zwei Anregungslaserstrahlen (5) auf und/oder in die optische Faser (1), derart, dass Fluoreszenzstrahlung (6) angeregt wird,
- Empfangen und Auswerten der Fluoreszenzstrahlung (6), und
- Lokalisieren der Brennpunkte (7) der mindestens zwei Anregungslaserstrahlen (5) unter Berücksichtigung der Auswertung der Fluoreszenzstrahlung (6) und Einstellen einer Ausrichtung der Anregungslaserstrahlen (5) unter Berücksichtigung der Brennpunkte (7), derart, dass die Brennpunkte der mindestens zwei Anregungslaserstrahlen (5) im Inneren eines Kerns der optischen Faser (1) überlappen.

2. Verfahren nach Anspruch 1,
**dadurch gekennzeichnet, dass** die optische Faser (1) fluoreszierend ist und/oder mindestens ein fluoreszierendes Material in die optische Faser (1) integriert ist.

3. Verfahren nach Anspruch 1 oder 2,
**dadurch gekennzeichnet, dass** die Brennpunkte (7) der mindestens zwei Anregungslaserstrahlen (5) auf einem optischen Anzeigegerät angezeigt werden.

4. Verfahren nach mindestens einem der vorhergehenden Ansprüche,
**dadurch gekennzeichnet, dass** die optische Faser (1) zumindest zeitweilig bewegt wird.

5. Verfahren nach mindestens einem der vorhergehenden Ansprüche,
**dadurch gekennzeichnet, dass** die reflektierte Strahlung (3) und/oder die Fluoreszenzstrahlung (6) durch eine Kamera (8) und/oder eine Fotodiode (9) empfangen wird.

6. Verfahren nach mindestens einem der vorhergehenden Ansprüche,
**dadurch gekennzeichnet, dass** sich die reflektierte Strahlung (3) und/oder die Fluoreszenzstrahlung (6) zumindest teilweise durch eine Lochblende (10) ausbreitet, bevor sie durch eine Fotodiode (9) empfangen wird.

7. Verfahren nach mindestens einem der vorhergehenden Ansprüche,
**dadurch gekennzeichnet, dass** die reflektierte Strahlung (3) und/oder die Fluoreszenzstrahlung (6) durch eine Kamera (8) empfangen und derart ausgewertet wird, dass ein Referenzpunkt, der eine spezifische Position der optischen Faser (1) darstellt, bestimmt wird.

8. Verfahren nach mindestens einem der vorhergehenden Ansprüche,
**dadurch gekennzeichnet, dass** Licht der mindestens zwei Anregungslaserstrahlen (5) fokussiert und/oder polarisiert wird, bevor die Laserstrahlen (5) auf die optische Faser (1) auftreffen.

9. Steuersystem für eine Lasereinheit zum Schreiben von Gittern (25) in eine optische Faser mit mindestens einer Schnittstelle zum Anschließen an eine Laserquelle und/oder Lichtführungsmittel, welches ein Teilsystem für die Faserverfolgung mit einem optischen Detektor (12) zum Empfangen von Strahlung (3), die aufgrund des Auftreffens von mindestens zwei Anregungslaserstrahlen (5) von der optischen Faser (1) reflektiert wird, eine Auswertungseinheit (13), die zum Bestimmen der Brennpunkte (7) der mindestens zwei Anregungslaserstrahlen (5) und zum Erzeugen eines Positionierungssteuersignals ausgelegt ist, und eine Bewegungseinheit (14), die zumindest zum zeitweiligen Bewegen der optischen Faser (1) auf Grundlage des Positionierungssteuersignals ausgelegt ist, umfasst, und welches ein Teilsystem für die Laserstrahlausrichtung mit einem optischen Detektor (16) zum Empfangen von Fluoreszenzstrahlung (6), die aufgrund des Auftreffens der mindestens zwei Anregungslaserstrahlen (5) durch die optische Faser (1) ausgesendet wird, umfasst,
**gekennzeichnet durch** eine Auswertungseinheit (13), die zum Bestimmen der Brennpunkte (7) der mindestens zwei Anregungslaserstrahlen (5) unter Berücksichtigung der Fluoreszenzstrahlung (6) und zum Erzeugen eines Ausrichtungssteuersignals ausgelegt ist, und durch eine Strahlausrichtungseinheit (15), die zum Einstellen eines sich ausbreitenden Pfades der Anregungslaserstrahlen (5) auf Grundlage des Ausrichtungssteuersignals ausgelegt ist, wobei die Auswertungseinheit (13) und die Strahlausrichtungseinheit (15) zum derartigen Übereinanderlegen der mindestens zwei Anregungslaserstrahlen (5) ausgelegt sind, dass die Brennpunkte (7) der Anregungslaserstrahlen (5) im Inneren eines Kerns der optischen Faser (1) überlappen.

10. Steuersystem nach Anspruch 9,
**dadurch gekennzeichnet, dass** der optische Detektor (12, 16) zum Empfangen von reflektierter Strahlung (3) oder Fluoreszenzstrahlung (6) eine Kamera (8) und/oder eine Fotodiode (9) umfasst.

11. Steuersystem nach Anspruch 9 oder 10,
**dadurch gekennzeichnet, dass** mindestens ein Objektiv (17) und/oder ein Strahlteiler (18) zwischen der optischen Faser (1) und mindestens einem der Detektoren (12, 16) angeordnet ist.

12. Steuersystem nach mindestens einem der Ansprüche 9 bis 11,
**dadurch gekennzeichnet, dass** mindestens ein dichroitischer Spiegel (19) zwischen mindestens einer Lasereinheit (21, 22) und der optischen Faser (1) angeordnet ist.

## Revendications

1. Méthode destinée à contrôler un processus d'écriture de réseaux (25) dans une fibre optique (1), comprenant les étapes suivantes:
- le guidage d'au moins deux rayons laser d'excitation (5) sur et/ou dans ladite fibre optique (1),
- la réception du rayonnement réfléchi (3) dû à l'impact des dits au moins deux rayons laser d'excitation (5),
- l'évaluation dudit rayonnement réfléchi (3) et la détermination des points focaux (7) des dits au moins deux rayons laser d'excitation (5),
- la détermination et/ou l'ajustement d'une position de ladite fibre optique (1) par rapport aux dits points focaux (7) des dits au moins deux rayons laser d'excitation (5),
**caractérisée par** les étapes suivantes:
- diriger lesdits au moins deux rayons laser d'excitation (5) sur et/ou dans ladite fibre optique (1) de façon à exciter un rayonnement fluorescent (6),
- recevoir et évaluer ledit rayonnement fluorescent (6), et
- localiser lesdits points focaux (7) des dits au moins deux rayons laser d'excitation (5) en tenant compte de l'évaluation dudit rayonnement fluorescent (6) et régler une orientation desdits rayons laser d'excitation (5) en tenant compte desdits points focaux (7), de telle sorte que lesdits points focaux des dits au moins deux rayons laser d'excitation (5) se chevauchent à l'intérieur d'un coeur de ladite fibre optique (1).

2. Méthode selon la revendication 1,
**caractérisée en ce que** ladite fibre optique (1) est fluorescente et/ou au moins un matériau fluorescent est intégré dans ladite fibre optique (1).

3. Méthode selon la revendication 1 ou 2,
**caractérisée en ce que** lesdits points focaux (7) des dits au moins deux rayons laser d'excitation (5) sont affichés sur un dispositif d'affichage optique.

4. Méthode selon au moins une des revendications précédentes,
**caractérisée en ce que** ladite fibre optique (1) est déplacée au moins temporairement.

5. Méthode selon au moins une des revendications précédentes,
**caractérisée en ce que** ledit rayonnement réfléchi (3) et/ou ledit rayonnement fluorescent (6) est reçu par une caméra (8) et/ou une photodiode (9).

6. Méthode selon au moins une des revendications précédentes,
**caractérisée en ce que** ledit rayonnement réfléchi (3) et/ou ledit rayonnement fluorescent (6) se propage au moins partiellement à travers un sténopé (10) avant d'être reçu par une photodiode (9).

7. Méthode selon au moins une des revendications précédentes,
**caractérisée en ce que** ledit rayonnement réfléchi (3) et/ou ledit rayonnement fluorescent (6) est reçu par une caméra (8) et évalué de telle sorte qu'un point de référence représentant une position spécifique de ladite fibre optique (1) est déterminé.

8. Méthode selon au moins une des revendications précédentes,
**caractérisée en ce que** la lumière des dits au moins deux rayons laser d'excitation (5) est focalisée et/ou polarisée avant que lesdits rayons laser (5) n'arrivent sur la fibre optique (1).

9. Système de contrôle pour une unité laser pour l'écriture de réseaux (25) dans une fibre optique avec au moins une interface pour le raccordement à une source laser et/ou à des moyens de guidage de la lumière, qui comprend un sous-système pour le suivi de la fibre avec un détecteur optique (12) pour la réception du rayonnement (3) qui est réfléchi par la fibre optique (1) en raison de l'impact d'au moins deux rayons laser d'excitation (5), une unité d'évaluation (13), qui est conçue pour déterminer les points focaux (7) des dits au moins deux rayons laser d'excitation (5) et pour générer un signal de commande de positionnement, et une unité de déplacement (14) qui est conçue pour déplacer au moins temporairement ladite fibre optique (1) sur la base du signal de commande de positionnement, et qui comprend un sous-système d'alignement de rayon laser avec un détecteur optique (16) pour recevoir le rayonnement fluorescent (6) émis en raison de l'impact des dits au moins deux rayons laser d'excitation (5) à travers ladite fibre optique (1),
**caractérisé par** une unité d'évaluation (13) qui est conçue pour déterminer les points focaux (7) des dits au moins deux rayons laser d'excitation (5) en tenant compte dudit rayonnement fluorescent (6) et pour générer un signal de commande d'orientation, et par une unité d'orientation de rayon (15), l'unité d'évaluation (13) et l'unité d'alignement de rayon (15) étant adaptées pour superposer lesdits au moins deux rayons laser d'excitation (5) de telle sorte que lesdits points focaux (7) desdits rayons laser d'excitation (5) se chevauchent à l'intérieur d'un coeur de ladite fibre optique (1).

10. Système de contrôle selon la revendication 9,
**caractérisé en ce que** ledit détecteur optique (12, 16) comprend une caméra (8) et/ou une photodiode (9) pour recevoir ledit rayonnement réfléchi (3) ou ledit rayonnement fluorescent (6).

11. Système de contrôle selon la revendication 9 ou 10,
**caractérisé en ce qu'**au moins un objectif (17) et/ou un séparateur de rayon (18) est disposé entre ladite fibre optique (1) et au moins un des dits détecteurs (12, 16).

12. Système de contrôle selon l'une des revendications 9 à 11,
**caractérisé en ce qu'**au moins un miroir dichroïque (19) est disposé entre au moins une unité laser (21, 22) et ladite fibre optique (1).
